# EUROPÄISCHE PATENTSCHRIFT

(11) **EP 2 311 159 B1**
(45) Veröffentlichungstag und Bekanntmachung des Hinweises auf die Patenterteilung: **01.02.2012**
(21) Anmeldenummer: 09804638.6
(22) Anmeldetag: 06.08.2009
(51) Int. Cl.: H01S 3/081, B23K 26/38

(54) **VERFAHREN UND ANORDNUNG ZUR ERZEUGUNG VON AZIMUTALER POLARISATION IN EINER LASERLICHTQUELLE UND VERWENDUNG DIESER ANORDNUNG ZUR LASERMATERIALBEARBEITUNG**
METHOD AND APPARATUS FOR PRODUCING AZIMUTHAL POLARIZATION IN A LASER LIGHT SOURCE AND USE OF SAID APPARATUS FOR LASER MATERIAL PROCESSING
PROCÉDÉ ET DISPOSITIF POUR GÉNÉRER UNE POLARISATION AZIMUTALE DANS UNE SOURCE DE LUMIÈRE LASER ET UTILISATION DE CE DISPOSITIF POUR USINAGE AU LASER

(30) Priorität: 08.08.2008 CH 12442008
(43) Veröffentlichungstag der Anmeldung: 20.04.2011
(73) Patentinhaber: Bystronic Laser AG, 3362 Niederönz (CH)
(72) Erfinder: STEFFEN, Jürg, CH-1267 Vich (CH); WITTWER, Stefan, CH-3360 Herzogenbuchsee (CH); REBER, Thomas, CH-3110 Münsingen (CH)
(74) Vertreter: Patentbüro Paul Rosenich AG
(86) Internationale Anmeldenummer: PCT/IB2009/053440
(87) Internationale Veröffentlichungsnummer: WO 2010/016028

(56) Entgegenhaltungen:
- MARWAN ABDOU AHMED ET AL: "RADIALLY POLARIZED 3 KW BEAM FROM A CO2 LASER WITH AN INTRACAVITY RESONANT GRATING MIRROR" OPTICS LETTERS, OSA, OPTICAL SOCIETY OF AMERICA, WASHINGTON, DC, US, Bd. 32, Nr. 13, 1. Juli 2007 (2007-07-01), Seiten 1824-1826, XP001505549 ISSN: 0146-9592
- SHOHAM A ET AL: "PRODUCTION OF RADIALLY AND AZIMUTHALLY POLARIZED POLYCHROMATIC BEAMS" OPTICS LETTERS, OSA, OPTICAL SOCIETY OF AMERICA, WASHINGTON, DC, US, Bd. 31, Nr. 23, 1. Dezember 2006 (2006-12-01), Seiten 3405-3407, XP001501791 ISSN: 0146-9592
- ORON RAM ET AL: "The formation of laser beams with pure azimuthal or radial polarization" APPLIED PHYSICS LETTERS, AIP, AMERICAN INSTITUTE OF PHYSICS, MELVILLE, NY, Bd. 77, Nr. 21, 20. November 2000 (2000-11-20), Seiten 3322-3324, XP012026688 ISSN: 0003-6951
- MEIER M ET AL: "Material processing with pulsed radially and azimuthally polarized laser radiation" APPLIED PHYSICS A; MATERIALS SCIENCE & PROCESSING, SPRINGER, BERLIN, DE, Bd. 86, Nr. 3, 13. Dezember 2006 (2006-12-13), Seiten 329-334, XP019473321 ISSN: 1432-0630

## Beschreibung

### Technisches Gebiet

Die Erfindung betrifft ein Verfahren und eine Anordnung zur Erzeugung von azimutaler Polarisation in einer Laserlichtquelle. Es handelt sich um einen Laser mit einem Laserstrahlengang für einen Laserstrahl mit einem Anteil eines azimutalen Polarisationszustands, welcher für die Nutzung zur Lasermaterialbearbeitung erfindungsgemäss maximiert werden soll. Die Erfindung betrifft somit auch ein Verfahren zur Erzeugung azimutal polarisierten Laserlichts mit einem erfindungsgemässen Laser sowie die anschliessende Verwendung dieses Laserlichts zur Lasermaterialbearbeitung.

### Stand der Technik

Hochleistungslaser, d.h. Laser mit einer Leistung im Multikilowattbereich, erzeugen bei Strahlumlenkung oder durch pump- und / oder laserinduzierte thermische Deformationen optischer Elemente im allgemeinen linear, elliptisch oder zufällig polarisiertes Laserlicht. In vielen Fällen kann damit aber nicht die für eine optimale Polarisation denkbare, maximal mögliche Leistung (bzw. Leistungsdichte) in das zu bearbeitende Werkstück eingebracht werden. Zudem verschlechtert sich mit zunehmender Leistung im Allgemeinen die Strahlqualität, so dass die Bearbeitungsgeschwindigkeit und -qualität sinkt.

Für Anwendungen des Lasers in der Materialbearbeitung, wie beispielsweise Konturschneiden und -schweissen, ist linear polarisiertes Licht jedoch wenig geeignet: Der Polarisationszustand des Lichts beeinflusst in hohem Mass, wie dieses Licht mit optischen Elementen und Materialien entlang seines Ausbreitungswegs reagiert. Insbesondere beim Laser-Konturschneiden hängen die Vorschubgeschwindigkeit und die Schnittqualität wegen des Lichteinfallswinkels an der Schnittfront stark von der Polarisationsform und vom Polarisationsgrad ab. Dabei steht als zentraler physikalischer Aspekt die Absorption des fokussierten Laserstrahls im Werkstück im Vordergrund.

Als gängige technische Lösung wird dabei gegenwärtig die lineare Polarisation in zirkulare Polarisation umgewandelt, um in allen Schneidrichtungen dieselbe Qualität zu erreichen. Industrielle Laserstrahlquellen der Multikilowatt-Leistungsklasse mit zirkular polarisiertem Laserlicht, beispielsweise für das Schneiden von Blechen, sind dabei seit langem bekannter Stand der Technik und werden häufig und in verschiedensten Industriezweigen eingesetzt.

In theoretischen Arbeiten, z. B. V. G. Niziev und A. V. Nesterov, J. Phys. D: Appl. Phys. 32, (1999), pp. 1455 - 1461: "Influence of beam polarization on laser cutting efficiency", wurde demgegenüber radial polarisierte Laserstrahlung als besonders vorteilhaft für das Laserschneiden empfohlen, mit einer prognostizierten Geschwindigkeitserhöhung für das Schneiden um bis zu 100% im Vergleich zum Einsatz zirkular polarisierten Lichts.

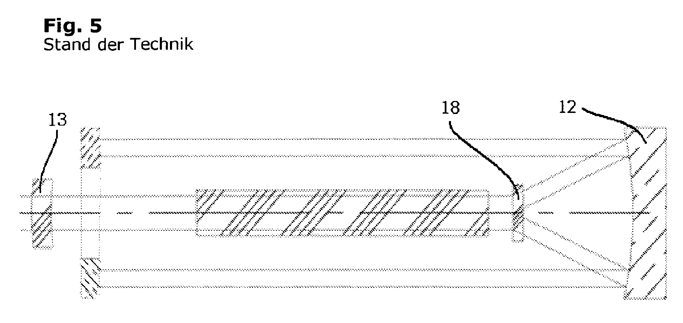

Radiale und azimutale Polarisationszustände können bekanntermassen dadurch erzeugt werden, dass kohärente Überlagerung von zwei senkrecht zueinander polarisierten Strahlen im TEM₁₀- und TEM₀₁-Mode erzeugt wird, beispielweise durch Aufteilung der Strahlung in einem Laserresonator mit einem polarisierenden Strahlteiler in einen Teil linear in einer Ebene polarisierter Strahlung und einen Teil linear in der dazu senkrechten Ebene polarisierter Strahlung (siehe auch Fig. 5). Ein Verfahren zur derartigen Erzeugung azimutal oder radial polarisierter Strahlung ist in der Patentanmeldung US-A-2002/0154672 beschrieben. Dieses Verfahren ist jedoch aufwendig.

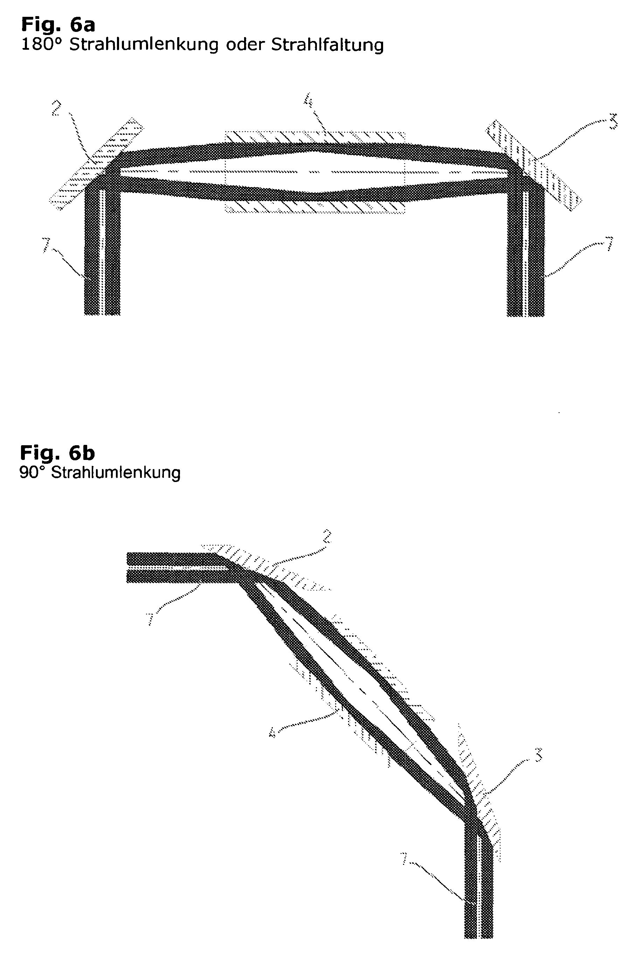

In einer weiteren Methode zur Erzeugung azimutaler oder radialer Polarisation werden Axikon- oder W-Axikon-Spiegelanordnungen eingesetzt, wie beispielsweise im Patent US-A-5359622 oder in der internationalen Patentanmeldung WO-A-96/42128 beschrieben. Hier wird azimutale oder radiale Polarisation oder eine Mischung aus beiden Polarisationen mithilfe eines konischen, transmittierenden Fensters erzeugt, indem der Konus im Brewster-Winkel steht (siehe auch Fig. 6) Bei einem Einfallswinkel von 45° auf die Spiegelflächen werden bei einer solchen Anordnung jedoch nicht nur azimutale oder radiale, sondern auch andere (zum Teil unerwünschte) Polarisationszustände erzeugt. Zugleich besteht bei solchen Anordnungen auch eine Tendenz zur Erzeugung (unerwünschter) höherer azimutaler Moden, so dass die Effizienz der Erzeugung azimutal polarisierter Strahlung und die Strahlqualität insgesamt nicht optimal ist.

Auf einem ähnlichen Prinzip wie die Axikon- oder W-Axikon-Spiegelanordnungen beruht eine in der EP-A-1744187 vorgeschlagene Konfiguration eines Polarisators zur Erzeugung radial oder azimutal polarisierten Laserlichts. Diese Anordnung beruht auf mindestens zwei in geringem Abstand voneinander angeordneten Flächen mit zueinander in ihrer Form komplementären Flächen, welche in eine Vielzahl von Teilstrukturen aufgeteilt sind, an denen durchtretendes Laserlicht an den Grenzflächen zwischen den mindestens teilweise transparenten Strukturen teilweise unter dem Brewster-Winkel reflektiert wird, was zu entsprechenden Änderungen des Anteils radial oder azimutal polarisierter Strahlung führt. Aufgrund der speziellen Geometrie der Anordnung kann jedoch ein Teil des eingestrahlten Lichts nicht dem Prozess der Polarisationsauswahl durch die Reflexion unter dem Brewster-Winkel unterzogen werden, so dass in einigen vorgeschlagenen Ausführungsformen absorbierende Beschichtungen für die Bereiche bereitgestellt werden, in denen die Polarisationsauswahl nicht erfolgt. Die Absorption des Laserlichts in diesen Beschichtungen ist aber mit der Entwicklung von überflüssiger Wärme verbunden, was eine Anwendung für Hochleistungslaser ausschliesst.

Das Problem der Wärmeentwicklung lässt transmissive Strukturen generell als wenig geeignet zum Einsatz für die Polarisationsauswahl in Verbindung mit Hochleistungslasern erscheinen.

In einem weiteren bekannten Verfahren zur Erzeugung azimutal oder radial polarisierten Laserlichts werden diffraktive optische Elemente als Bestandteile von Polarisatoren verwendet. Ein solcher Polarisator, basierend auf einem Vielschichten-Spiegel in Kombination mit einer diffraktiven Gitterstruktur wurde in der WO-A-01/09650 offenbart. Über die Realisierung einer solchen Anordnung in einer CO₂-Laserstrahlquelle wurde beispielsweise in Laser Magazin 3/2007, pp. 22 - 23 und in der Publikation Marwan A. A. et al., Opt. Lett. 32 (13), "Radially polarized 3kW beam from a CO2 laser with an intracavity resonant grating mirror", p. 1824 - 1826 (2007) berichtet. Ähnliche Anordnungen werden beispielsweise in der Offenlegungsschrift DE-A-10 2004 042 748 und der Veröffentlichung A. V. Nesterov et al., J. Phys. D: Appl. Phys. 32 (1999), pp. 2871 - 2875, "Generation of high-power radially polarized beam" beschrieben.

Die Herstellung diffraktiver optischer Elemente ist allerdings aufwendig. Nachteilig haben diffraktive optische Elemente in ihren bisherigen Verwendungen ausserdem in den benutzten Beugungsordnungen nur einen beschränkten Reflexionsgrad. U.a. deshalb haben sie sich zur Polarisationserzeugung bei hohen Laser-Leistungen bis jetzt im Allgemeinen nicht bewährt.

In dem Artikel M.E. Marhic und E. Garmire, Appl. Phys. Lett. 38 (1981), pp. 743 - 745, "Low-order TE0q operation of a CO2 laser for transmission through circular metallic waveguides" wurde die Verwendung metallischer Wellenleiter im Laserresonator zur Erzeugung azimutal polarisierten Lichts beschrieben. Dabei wurde das Licht innerhalb des Laserresonators in den Wellenleiter eingekoppelt, welcher so dimensioniert war, dass die Wellenleitermoden azimutale Polarisation erzeugen. Eine solche Anordnung eignet sich jedoch nachteiligerweise wenig für aufgeweitete Laserstrahlen und erfordert ausserdem eine sehr genaue und daher aufwendige Justierung des Einkoppelwinkels in den Wellenleiter.

### Erfindung

Aufgabe der vorliegenden Erfindung ist die Bereitstellung einer kompakten, einfach herstellbaren Anordnung zur Erhöhung der Effizienz bei der Materialbearbeitung durch Laser, insbesondere beim Laserschneiden, wobei die Nachteile der bekannten Anordnungen aus dem Stand der Technik vermieden werden sollen. Im Besonderen soll mit einfachen Mitteln ein einwandfreier azimutaler Polarisationszustand hergestellt werden, der gegebenenfalls später in einen radialen Polarisationszustand überführt werden soll.

Diese Aufgabe wird gelöst mit einem Laser mit den Merkmalen des Anspruchs 1, d.h. mit einem Laser mit einem Laserstrahlengang für einen Laserstrahl mit einem Anteil azimutalen Polarisationszustands in einem Laserresonator, wobei der Laserstrahlengang zwischen zwei um einen Aufweitungswinkel strahlaufweitenden optischen Komponenten eine strahlfokussierende optische Komponente mit Spiegelflächen aufweist, an denen im Betriebszustand des Lasers das von den strahlaufweitenden optischen Komponenten auf diese Spiegelfächen gelenkte Licht unter einem Winkel am oder nahe dem Brewster-Winkel auftrifft und reflektiert wird, und wodurch der Anteil des azimutalen Polarisationszustands durch selektive Minimierung von dessen Verlusten bei der Reflexion maximiert wird.

Bevorzugte Ausführungsformen der Erfindung zeichnen sich dadurch aus, dass zumindest der Laserresonator ausschliesslich reflektive optische Komponenten umfasst. Dieses betrifft bei dieser Weiterentwicklung insbesondere auch die vorgenannten strahlaufweitenden optischen Komponenten. Bevorzugt handelt es sich hierbei um konkave oder konvexe, sphärisch oder asphärisch gewölbte Spiegel, die weiter bevorzugt als Metallspiegel aufgegebaut sind.

Vorteilsweise ist der Umfang der Spiegel elliptisch ausgebildet, wobei die Ellipse ein Achsenverhältnis 1/cos α aufweist. Der Winkel α entspricht dabei dem Strahleinfallswinkel auf dem Spiegel (Projektionskompensation) bzw. auf dessen Wölbungsgrundfläche. Unter dem Spiegelumfang wird dabei der Umfang der Wölbungsgrundfläche verstanden, wie sie in der Aufsicht betrachtet ersichtlich ist.

Typischerweise (in Abhängigkeit von der verwendeten Resonatorgeometrien) wird für α ein Wert von 0° bis 67.5° gewählt, was einem Achsenverhältnis von 1 bis 2.61 entspricht.

Vorzugsweise sind die beiden strahlaufweitenden optischen Komponenten, d. h. Spiegel in den bevorzugten Ausführungsformen der Erfindung, in ihrer Form identisch ausgebildet.

Die strahlfokussierende optische Komponente umfasst vorzugsweise eine Spiegelanordnung mit einander zugewandten Spiegelflächen.

Besonders bevorzugt wird, dass die Spiegelanordnung rohrförmig, vorzugsweise als innenverspiegeltes Rohr ausgebildet ist. Ganz besonders bevorzugt wird eine Ausführungsform der Spiegelanordnung als innenverspiegeltes rotationssymmetrisches Rohr ausgeführt. Die Innenverspiegelung wird dabei durch eine geeignete Beschichtung oder durch die Feinbearbeitung der Innenfläche auf eine Subwellenlängenrauheit ohne Beschichtung erzielt.

Eine bevorzugte Ausführungsform der Erfindung ist also dadurch gekennzeichnet, dass die als innenverspiegeltes Rohr bereitgestellte Spiegelanordnung zylindrisch ausgebildet ist. Die Spiegelanordnung kann einstückig ausgebildet sein oder auch aus mehreren Teilen bestehen.

Die bis jetzt beschriebenen Gegenstände der Erfindung beziehen sich auf die erfindungsgemäss essentiellen optischen Komponenten, die innerhalb eines Laserresonators eines erfindungsgemässen Lasers angeordnet sind, zur Erzeugung eines azimutal polarisierten Laserstrahls. Damit umfasst die Erfindung auch eine Polarisatorvorrichtung, welche zwischen zwei um einen Aufweitungswinkel strahlaufweitenden optischen Komponenten (2, 3) eine strahlfokussierende optische Komponente (4) mit Spiegelflächen aufweist, an denen im Betriebszustand des Polarisators im Laserresonator das von den strahlaufweitenden optischen Komponenten auf diese Spiegelfächen gelenkte Licht unter einem Winkel am oder nahe dem Brewster-Winkel auftrifft und reflektiert wird, wodurch der Anteil des azimutalen Polarisationszustands durch selektive Minimierung von dessen Verlusten bei der Reflexion maximiert wird.

Bestandteil der Erfindung ist auch eine Ausführungsform des erfindungsgemässen Lasers mit einem Austrittsstrahlengang für einen im Betriebszustand des Lasers aus dem Laserresonator austretenden Austrittsstrahl, wobei der Laserresonator gegebenenfalls weitere Umlenkspiegel aufweist, welche mit einer solchen Beschichtung versehen sind, dass sie bei Reflexion eine möglichst geringe Polarisationsselektivität aufweisen, so dass sie den azimutalen Polarisationsgrad des intrakavitären Laserstrahls nicht ändern und im Betriebszustand des Lasers der Austrittsstrahl zunächst azimutal polarisiert ist.

Im Übrigen wird darauf hingewiesen, dass die verwendeten Spiegel vorzugsweise handelsübliche Spiegel mit Metallsubstrat, insbesondere Kupfer- oder Siliziumsubstrat sein können, deren Verhältnis von s-Reflektion zu p-Reflektion zwischen 0.9 und 1.1 liegt, jedoch vorzugsweise möglichst nahe bei 1.

Besonders geringe Polarisationsselektivität bieten metallische Beschichtungen hoher Reflektivität (zB. Au, Al und Ag für CO₂-Laser sowie Al und Ag für 1 µm-Strahler), wie sie im Handel erhältlich sind.

Für den Einsatz in der Materialbearbeitung, insbesondere zum Laserschneiden, wird allerdings kein azimutal, sondern für höchste Bearbeitungseffizienz vorzugsweise ein radial polarisierter Laserstrahl benötigt, wie vorangehend beschrieben. Die Polarisation des Laserlichts im Austrittsstrahl wird also vorzugsweise geändert. Es wird dazu bevorzugt im Austrittsstrahlengang des Lasers eine Polarisatorvorrichtung mit mindestens einem phasen-retardierenden oder unbeschichteten Spiegel mit einer Eingangsstrahlachse angeordnet. Der Spiegel bzw. die Polarisationsvorrichtung muss dabei geeignet sein, den azimutalen Polarisationszustand in einen von azimutal verschiedenen Polarisationszustand zu wandeln.

Phasenretardierende Spiegel wirken wie λ/n-Verzögerungsplatten. Um beispielsweise azimutale in radiale Polarisation umzuwandeln, werden üblicherweise zwei um 45° verdrehte λ/2-Verzögerungsplatten verwendet. Da im kW-Leistungsbereich jedoch keine verlustarmen transmissiven Verzögerungsplatten existieren, werden Spiegel mit verzögernden Schichten verwendet, wobei die Absorptionsverluste durch die geringe Schichtdicke minimal sind. Handelüblich sind λ/4-phasenverzögernde Spiegel, die normalerweise zur Umwandlung von linearer in zirkulare Polarisation eingesetzt werden, wobei sie diagonal zur Schwingungsrichtung in den Strahl gestellt werden müssen. Physikalisch wird die Phasenverzögerung erreicht, indem die Komponenten einer elektromagnetische Welle bei der Wechselwirkung mit Materie unterschiedliche Fortpflanzungscharakteristik *erhalten.* Da Reflektion nichts anderes als eine solche Wechselwirkung ist, kann man sich im Rahmen der Erfindung durchaus materalabhängige, phasenretardierende Effekte bei unbeschichteten Elementen vorstellen.

Eine bevorzugte Ausführungsform eines erfindungsgemässen Lasers mit einer Polarisationsvorrichtung im Austrittsstrahlengang ergibt sich, wenn im Austrittsstrahlengang eine Polarisatorvorrichtung, bestehend aus vier paarweise um 45° um die Eingangsstrahlachse verdrehten, um eine Viertelwellenlänge des Laserlichts retardierenden Spiegeln angeordnet ist, welche geeignet ist, den azimutalen in einen radialen Polarisationszustand zu wandeln.

In einer anderen bevorzugten Alternative besteht die Polarisationsvorrichtung aus zwei um 45° um die Eingangsstrahlachse verdrehten, um eine halbe Wellenlänge des Laserlichts retardierende Spiegeln.

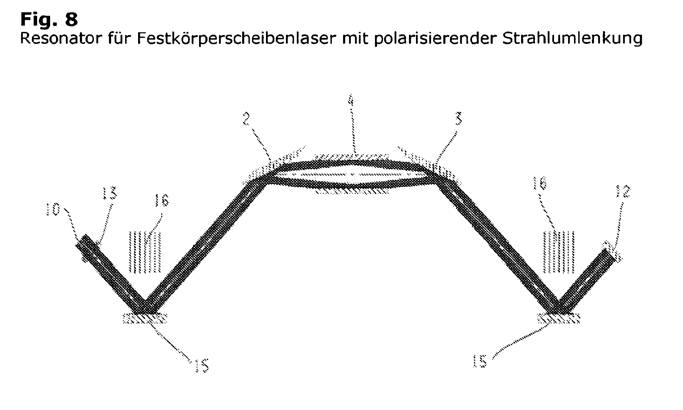

Bevorzugt weist der erfindungsgemässe Laser einen gefalteten Strahlengang auf. In einer möglichen Ausführungsform sind dazu die strahlaufweitenden und strahlfokussierenden optischen Komponenten (vorzugsweise Spiegel) so angeordnet, dass sie eine Strahlumlenkung um 180° erzeugen. In einer anderen bevorzugten Ausführungsform sind sie zur Erzeugung einer Strahlumlenkung um 90° angeordnet (siehe auch Fig. 8a und Fig. 8b).

Vorzugsweise handelt es sich bei dem erfindungsgemässen Laser um einen Hochleistungslaser der Multikilowatt-Leistungsklasse. Dabei kann es sich sowohl um einen Gaslaser, vorzugsweise mit einer Gasmischung als verstärkendem Medium für einen CO₂-Laser als auch um einen Festkörperlaser handeln. Azimutale Polarisation eignet sich wegen der axialsymmetrischen, pumpinduzierten thermischen Linse eines Laserstabs besonders gut für Stab-Festkörperlaser, wobei im Laserresonator ein oder mehrere Laserstäbe angeordnet sein können. Auch diodengepumpte Scheibenlaser mit einer oder mehreren Scheiben als verstärkendem Medium sind als erfindungsgemäss eingesetzte Laser gut geeignet.

Bestandteil der vorliegenden Erfindung sind auch Verfahren zur Erzeugung azimutaler Polarisation eines Laserstrahls mit einem Polarisationsgrad in einem Laserresonator eines erfindungsgemässen Lasers nach einer der vorgenannten Ausführungsformen, dadurch gekennzeichnet, dass ein intrakavitärer Laserstrahl von strahlaufweitenden optischen Komponenten aufgeweitet und auf eine Spiegelfläche einer im Strahlengang zwischen den strahlaufweitenden Komponenten befindlichen strahlfokussierenden optischen Komponente geleitet wird derart, dass der intrakavitäre Laserstrahl an der Spiegelfäche der strahlfokussierenden optischen Komponente unter einem Winkel am oder nahe dem Brewster-Winkel auftrifft und reflektiert wird, wodurch der Anteil des azimutalen Polarisationszustands durch selektive Minimierung von dessen Verlusten bei der Reflexion maximiert wird.

Weiterer Bestandteil der vorliegenden Erfindung ist die Verwendung des erfindungsgemässen Lasers oder des erfindungsgemässen Verfahrens zur Lasermaterialbearbeitung, insbesondere zum Laserschneiden.

Eine Variante des erfindungsgemässen Verfahrens ist dadurch gekennzeichnet, dass diejenigen Anteile der aufgeweiteten Strahlung, die den fokussierenden Rohrspiegel nicht treffen (Verluststrahlung), an gekühlten Aperturen im Laserresonator absorbiert werden, bevorzugt indem die Aperturinnenflächen aufgerauht und/oder mittels eines geeigneten Verfahrens (zB. Eloxieren) geschwärzt werden.

Anhand von Figuren wird die Erfindung nachfolgend symbolisch und beispielhaft näher erläutert.

Die Figuren werden zusammenhängend und übergreifend beschrieben. Gleiche Bezugszeichen bedeuten gleiche Bauteile. Die Bezugszeichenliste ist Bestandteil der Offenbarung.

Es zeigen dabei
Fig.1 den schematischen Aufbau eines erfindungsgemässen Lasers,
Fig.2 eine Polarisatorvorrichtung für einen erfindungsgemässen Laser
Fig.3 eine aus dem Stand der Technik bekannte Anordnung zur Erzeugung radialer und azimutaler Polarisationszustände
Fig. 4a und Fig. 4b zwei weitere, einander ähnliche und aus dem Stand der Technik bekannte Anordnungen zur Erzeugung radialer und azimutaler Polarisationszustände
Fig. 5 eine weitere aus dem Stand der Technik bekannte Anordnung zur Erzeugung radialer und azimutaler Polarisationszustände
Fig. 6a eine Teilansicht eines erfindungsgemässen Lasers zur Erzeugung einer Strahlumlenkung um 180°
Fig. 6b eine Teilansicht eines erfindungsgemässen Lasers zur Erzeugung einer Strahlumlenkung um 90°
Fig. 7 den Laserresonator eines erfindungsgemässen Festkörper-Stablasers mit polarisierender Strahlumlenkung
Fig.8 den Laserresonator eines erfindungsgemässen Festkörper-Scheibenlasers mit polarisierender Strahlumlenkung
Fig. 9a illustriert, wie die Form von Spiegelmembranen als Spiegelflächen 2, 3, 4 mithilfe von Aktuatoren deformiert wird.
Fig. 9b illustriert, wie die Form von Spiegelmembranen als Spiegelflächen 2, 3, 4 durch Beaufschlagung mit einem regelbaren Druck einer Kühlflüssigkeit oder eines pneumatischen Gases deformiert wird.
Fig. 10 illustriert eine Anordnung mit aufgerauhten Aperturinnenflächen, bei der die nicht an Spiegel 4 reflektierte Strahlung (Verluststrahlung) absorbiert wird.

### Detaillierte Beschreibung der Figuren

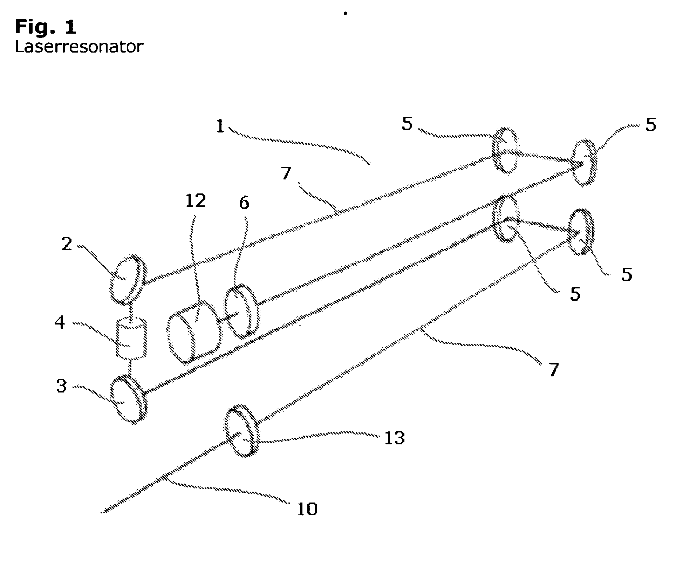

Fig. 1 zeigt den Laserresonator eines erfindungsgemässen Lasers 1, vorzugsweise hier in der Darstellung eines Gaslasers, mit einem gefalteten intrakavitären Laserstrahlengang 7 zwischen dem Endspiegel 6 und dem Auskoppelspiegel 13 des Laserresonators. Mit 12 ist die Leistungssensorik mit zugehöriger Auswerteelektronik bezeichnet.

In dem Laserresonator sind zwei strahlaufweitende optische Komponenten 2, 3 und dazwischen eine strahlfokussierende optische Komponente 4 - jeweils mit Spiegelflächen - angeordnet. Die strahlaufweitenden optischen Komponenten 2, 3 weiten im Betriebszustand den Laserstrahl auf und lenken ihn um in Richtung der Spiegelflächen des strahlfokussierenden optischen Elements 4 derart, dass der Laserstrahl an dessen Spiegelflächen am oder nahe dem Brewster-Winkel auftrifft und reflektiert wird. Bei dieser Reflexion wird selektiv der Verlust des Anteils azimutal polarisierten Lichts minimiert, so dass sich der Anteil des azimutalen Polarisationszustands im strahlverstärkenden Medium des Laserresonators gegenüber anderen Polarisationszuständen durchsetzt. An der Spiegelfläche des optischen Elements 4 wird das auftreffende Licht in Richtung der jeweils gegenüberliegenden strahlaufweitenden optischen Komponente 2, 3 reflektiert, von wo es dann als intrakavitärer Laserstrahl 7 in Richtung der jeweils nächstliegenden Endoptik 6, 13 des Laserresonators geleitet wird. Im gezeigten Ausführungsbeispiel befinden sich optional zusätzliche Umlenkspiegel 5 im Strahlengang. Die Strahlaufweitung und Strahlfokussierung sind in Fig. 6a besonders deutlich für eine Strahlumlenkung um 180° und in Fig.6b für eine Strahlumlenkung um 90° dargestellt.

Bei den beiden strahlaufweitenden optischen Komponenten 2, 3 handelt es sich vorzugsweise um konkave oder konvexe (wie dargestellt), sphärisch oder asphärisch gewölbte Spiegel, welche besonders bevorzugt identisch ausgebildet sind, wobei die elliptische Grundfläche der Wölbung die Projektion des Strahleinfallswinkels kompensiert.

Vorzugsweise ist die strahlfokussierende optische Komponente 4 als innenverspiegeltes Rohr ausgebildet und wird dann nachfolgend als "Rohrspiegel" 4 bezeichnet.

Die reflektierenden Flächen von Spiegeln 2, 3, 4 sind vorzugsweise diamantbearbeitet, besonders bevorzugt durch Diamantfräsen oder Diamantdrehen.

Eine besondere Ausführungsform der Erfindung zeichnet sich dadurch aus, dass Spiegel 2, 3, 4 als deformierbare Spiegelmembranen einstellbar aufgebaut sind. Dabei kann die Einstellung der Spiegel mit mehreren Aktuatoren oder durch Beaufschlagung mit einem regelbaren hydraulischen oder pneumatischen Druck, z.B. von Kühlflüssigkeit oder Druck-Gas, erfolgen.

Die Umlenkspiegel 5 im weiteren Strahlengang des Laserresonators sind vorzugsweise mit einer solchen Beschichtung versehen, dass sie bei einer Reflexion des auftreffenden Lichts eine möglichst geringe Polarisationsselektivität aufweisen, so dass der azimutale Polarisationsgrad bei einer Reflexion erhalten bleibt und im Betriebszustand des Lasers der Austrittsstrahl 10 zunächst ebenfalls optimal azimutal polarisiert ist.

Um eine optimale Effizienz für die Materialbearbeitung, insbesondere für das Laserschneiden, zu erzielen, muss der azimutal polarisierte Austrittsstrahl 10 für bestimmte Bearbeitungsvorgänge in einen Strahl mit radialem oder gemischtem Polarisationszustand umgewandelt werden.

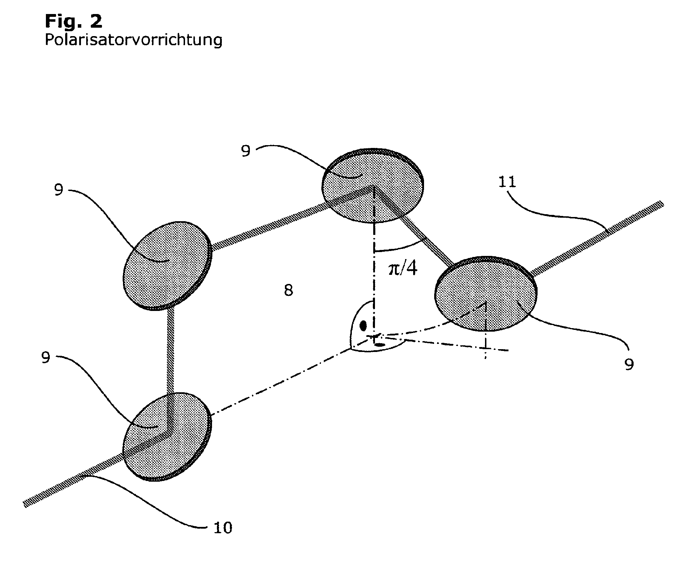

Fig. 2 zeigt eine Polarisatorvorrichtung 8, betstehend aus phasen-retardierenden oder unbeschichteten Spiegeln 9, die im Strahlengang des Austrittsstrahl 10 angeordnet ist und dazu dient, den ausgekoppelten, azimutal polarisierten Strahl 10 in einen Strahl 11 mit radialem oder gemischtem Polarisationszustand umzuwandeln. In dem gezeigten Beispiel besteht die Polarisatorvorrichtung aus vier paarweise um je 45° um die Eingangsstrahachse verdrehten und um eine Viertelwellenlänge des Laserlichts retardierenden Spiegeln 9.

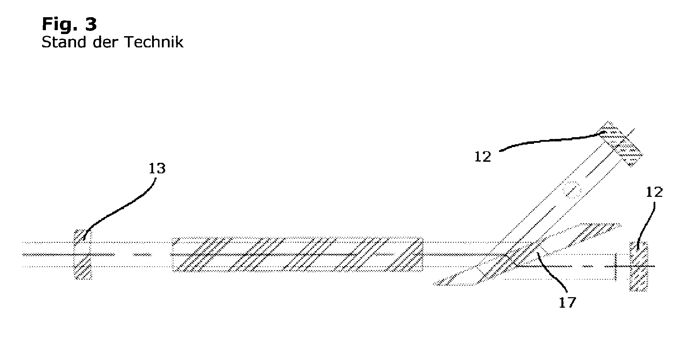

Fig. 3 zeigt eine aus dem Stand der Technik bekannte Anordnung zur Erzeugung radialer und azimutaler Polarisationszustände. Dazu wird, wie hier dargestellt, die Strahlung im Laserresonator mit einem polarisierenden Strahlteiler 17 aufgeteilt in einen Teil linear in einer Ebene polarisierter Strahlung und einen Teil linear in der dazu senkrechten Ebene polarisierter Strahlung. Aus der Überlagerung der senkrecht zueinander, linear polarisierten Teilstrahlen ergeben sich radiale und azimutale Polarisationszustände. Dieses Verfahren zur Erzeugung azimutal oder radial polarisierter Strahlung ist beispielsweise in der Anmeldung US-A-2002/0154672 genauer beschrieben. Dieses Verfahren ist jedoch aufwendig.

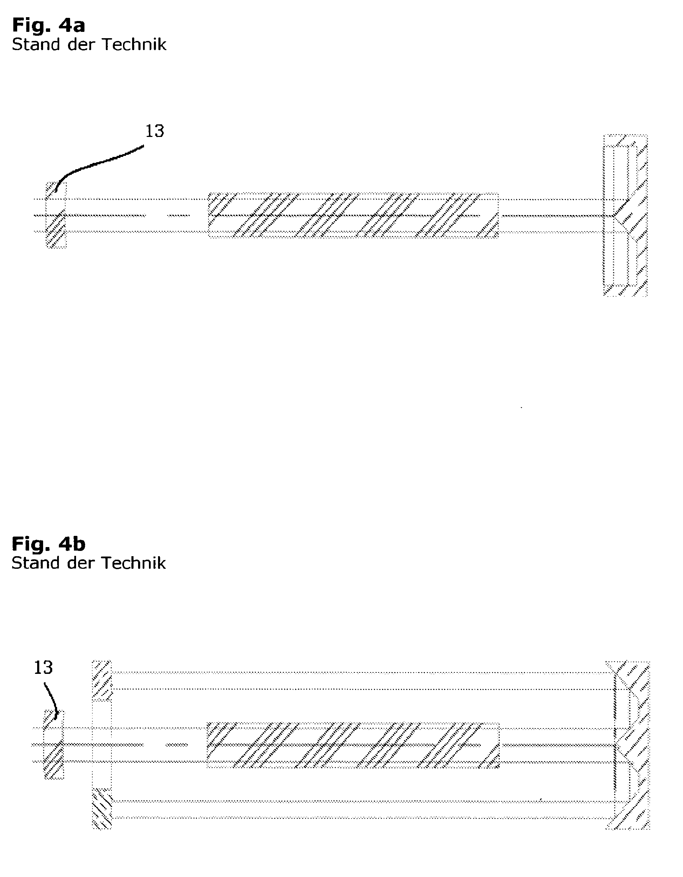

Fig. 4a und Fig. 4b illustrieren zwei verschiedene bekannte Ausführungsformen von Axikon- oder W-Axikon-Spiegelanordnungen im Laserresonator, wobei der Konus des Spiegels im Brewster-Winkel steht und bei der Spiegelung daran azimutale und radiale Polarisationszustände entstehen.

Fig. 5 illustriert eine weitere aus dem Stand der Technik bekannte Anordnung zur Erzeugung radialer oder azimutaler Polarisation mithilfe diffraktiver optischer Elemente. Dabei wirkt das schematisch dargestellte diffraktive optische Element 18 als Polarisator innerhalb des Laserresonators, dessen rechter Endspiegel hier als Konvexspiegel ausgebildet ist. Das diffraktive Element ist in Form eines transmissiven, axialsymmetrischen Gitters ausgeführt, welches je nach Gitterstruktur azimutale oder radiale Polarisation erzeugt.

Fig. 6a zeigt eine Teilansicht eines erfindungsgemässen Laserresonators mit einer Strahlumlenkung um 180° durch entsprechende Umlenkung des intrakavitären Laserstrahls 7 an den unter 45° im Winkel zueinander angeordneten Spiegelflächen 2, 4 und 3.

Fig. 6b zeigt eine Teilansicht eines erfindungsgemässen Laserresonators mit einer Strahlumlenkung um 90°durch entsprechende Umlenkung des intrakavitären Laserstrahls 7 an den unter 22.5° im Winkel zueinander angeordneten Spiegelflächen 2, 4 und 3.

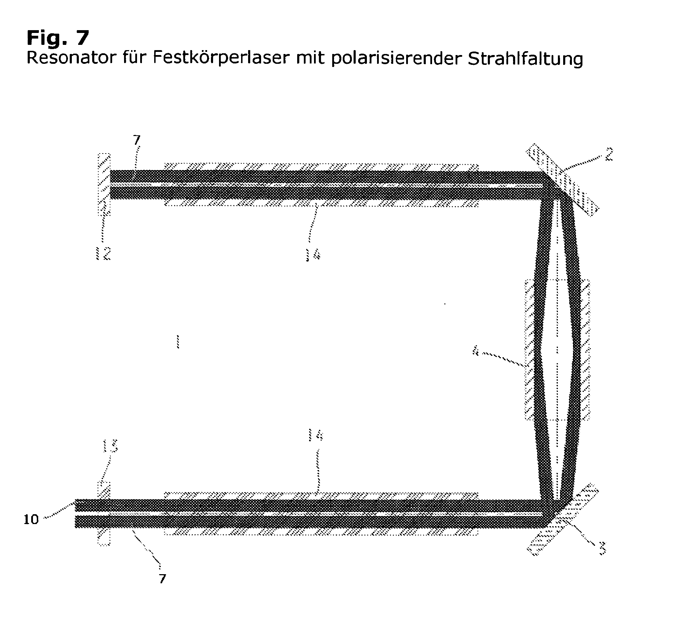

Fig. 7 zeigt den Laserresonator eines erfindungsgemässen Festkörper-Stablasers mit polarisierender Strahlumlenkung durch Spiegel 2, 3, 4 zur Erzeugung azimutaler Polarisation. Im gezeigten Beispiel befinden sich zwischen Spiegeln 2, 3 und den Endspiegeln 6, 13 des Laserresonators Festkörperstäbe 14 als verstärkendes Medium im Laserstrahlengang .

Fig. 8 zeigt den Laserresonator eines erfindungsgemässen Festkörper-Scheibenlasers mit polarisierender 90-grädiger Strahlumlenkung durch Spiegel 2, 3, 4 zur Erzeugung azimutaler Polarisation. Festkörperscheiben 15 werden durch den Pumplichtstrahl16 gepumpt.

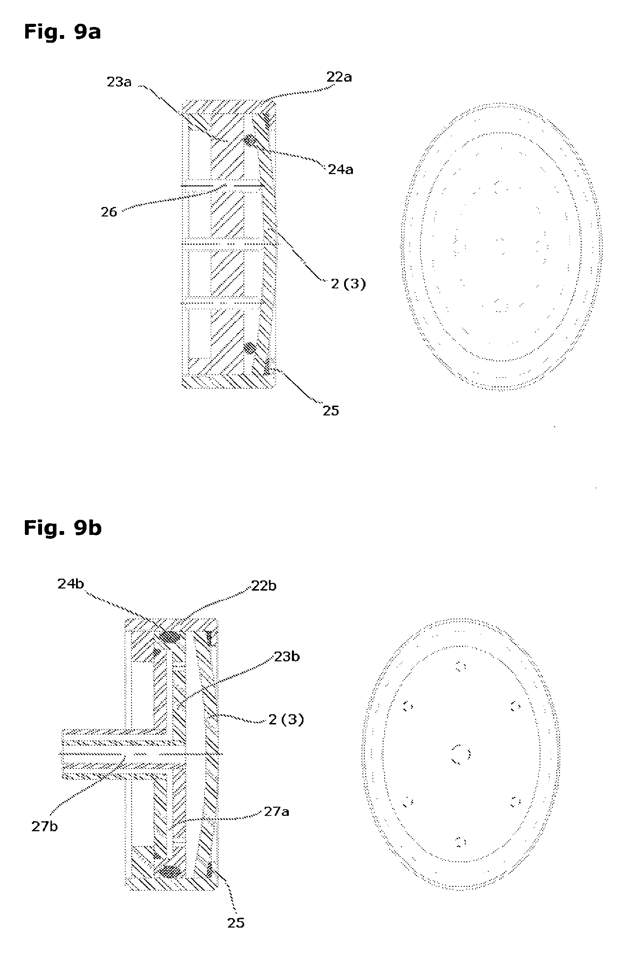

Fig. 9a illustriert, wie die Formen von Spiegelmembranen als Spiegelflächen 2 und 3 mithilfe von Aktuatoren deformierbar sind. Die Spiegelflächen 2 ist in einem Druckkörper 22a eingefasst. Dieser umfasst eine Druckwand 23a, durch die mittels Bohrungen Stössel 26, die ihrerseits hydraulisch oder pneumatisch oder elektromagnetisch angetrieben sind, auf die Rückseite der Spiegelfläche 2 gepresst werden können, so dass sich die Krümmung der Spiegelfläche entsprechend ändert. Ein elastischer Dichtring 24a und eine elastische Dichtmasse 25 halten die Spiegelfläche gegenüber dem Druckkörper 22a schwimmend positioniert. Bei grösserem Druck wölbt sich die Spiegelfläche 2 konkaver nach aussen, wodurch ihre Streuwirkung vergrössert wird. Bei kleinerem Druck reduziert sich die Krümmung der Spiegelfläche 2.

Fig. 9b illustriert eine Variante, wie die Form von Spiegelmembranen als Spiegelflächen 2 und 3 durch Beaufschlagung mit einem regelbaren Druck von Kühlwasser oder eines Gases deformierbar sind. Die Spiegelfläche 2 ist - vergleichbar zu Fig. 11a - in einem Druckkörper 22b eingefasst. Dieser umfasst eine Druckwand 23b, durch die mittels Bohrungen 27a, 27b hydraulischer oder pneumatischer Druck auf die Rückseite der Spiegelfläche 2 gepresst werden kann. Ein elastischer Dichtring 24b und eine elastische Dichtmasse 25 dichten den Hohlraum hinter der Spiegelfläche 2 gegenüber dem Druckkörper 22b ab. Bei grösserem Druck in den Bohrungen 27a, 27b wölbt sich die Spiegelfläche 2 konkaver nach aussen, wodurch ihre Streuwirkung vergrössert wird. Bei kleinerem Druck reduziert sich die Krümmung der Spiegelfläche 2.

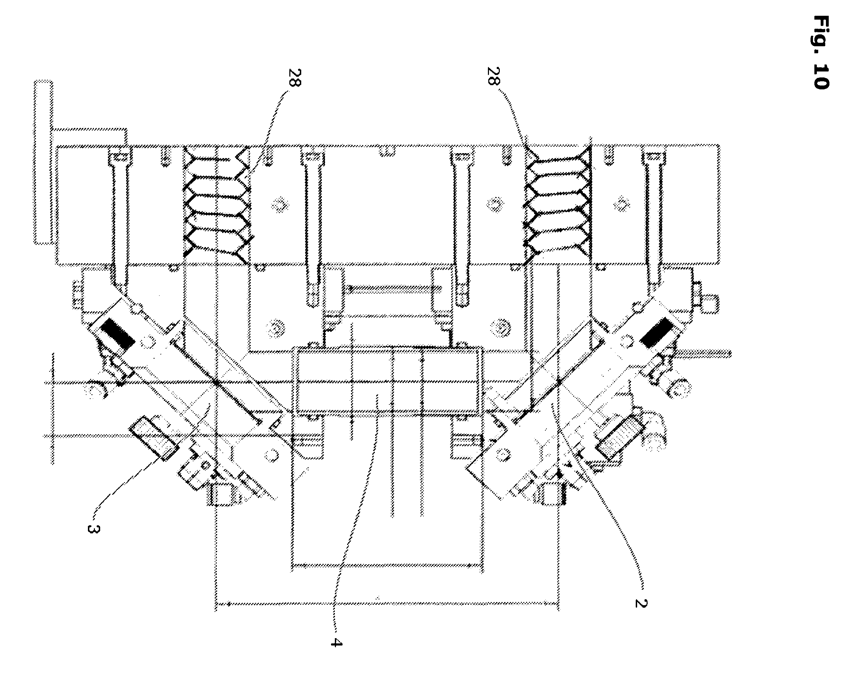

Fig. 10 illustriert eine Anordnung, womit diejenigen Anteile der aufgeweiteten Strahlung, die den fokussierenden Rohrspiegel 4 nicht treffen (Verluststrahlung), an gekühlten Aperturinnenflächen (28) im Laserresonator absorbiert werden, wobei die Aperturinnenflächen bevorzugt aufgerauht und/oder geschwärzt sind.

### Bezugszeichenliste

- 1: Laserresonator
- 2: Strahlaufweitende optische Komponente, Spiegel
- 3: Strahlaufweitende optische Komponente, Spiegel
- 4: Strahlfokussierende optische Komponente, Spiegelanordnung, Rohrspiegel
- 5: Umlenkspiegel
- 6: Endspiegel des Laserresonators
- 7: Intrakavitärer Laserstrahl
- 8: Polarisatorvorrichtung
- 9: Phasen-retardierender oder unbeschichteter Spiegel
- 10: Austrittsstrahl des Lasers mit azimutalem Polarisationszustand
- 11: Laserstrahl mit radialem oder gemischtem Polarisationszustand
- 12: Leistungssensorik mit Auswerteelektronik
- 13: Auskoppelspiegel des Laserresonators
- 14: Laserstab
- 15: Scheibe eines Festkörper-Scheibenlasers
- 16: Pumplichtstrahl
- 17: Polarisierender Strahlteiler
- 18: Diffraktives optisches Element
- 22a,b: Druckkörper
- 23a,b: Druckwand
- 24a,b: Dichtring
- 25a,b: Dichtmasse
- 26: Stössel
- 27a,b: Bohrungen
- 28: Aperturinnenflächen mit Aufrauhung und/oder Schwärzung

## Patentansprüche

1. Laser (1) mit einem Laserstrahlengang für einen Laserstrahl mit einem Anteil eines azimutalen Polarisationszustands in einem Laserresonator, **dadurch gekennzeichnet, dass** der Laserstrahlengang zwischen zwei um einen Aufweitungswinkel strahlaufweitenden optischen Komponenten (2, 3) eine strahlfokussierende optische Komponente (4) mit Spiegelflächen aufweist, an denen im Betriebszustand des Lasers (1) das von den strahlaufweitenden optischen Komponenten (2, 3) auf diese Spiegelflächen gelenkte Licht unter einem Winkel am oder nahe dem Brewster-Winkel auftrifft und reflektiert wird, wodurch der Anteil des azimutalen Polarisationszustandes durch selektive Minimierung von dessen Verlusten bei der Reflexion maximiert wird.

2. Laser (1) nach Anspruch 1, **dadurch gekennzeichnet, dass** die strahlfokussierende optische Komponente (4) symmetrisch zwischen den strahlaufweitenden optischen Komponenten (2, 3) angeordnet ist.

3. Laser (1) nach einem der Ansprüche 1 oder 2, **dadurch gekennzeichnet, dass** die beiden strahlaufweitenden optischen Komponenten als konkave oder konvexe, sphärisch oder asphärisch gewölbte Spiegel mit einer Wölbungsgrundfläche ausgebildet sind, wobei vorzugsweise der Umfang der Spiegel elliptisch ausgebildet ist und die Ellipse ein Achsenverhältnis 1/cos α aufweist, wobei α der Strahleinfallswinkel auf der Wölbungsgrundfläche ist.

4. Laser (1) nach einem der vorhergehenden Ansprüche, **dadurch gekennzeichnet, dass** die beiden strahlaufweitenden optischen Komponenten (2, 3) identisch ausgebildet sind.

5. Laser (1) nach einem der vorhergehenden Ansprüche, **dadurch gekennzeichnet, dass** die strahlfokussierende optische Komponente (4) eine Spiegelanordnung mit einander zugewandten Spiegelflächen umfasst, wobei vorzugsweise die Spiegelanordnung rohrförmig, vorzugsweise als innenverspiegeltes Rohr ausgebildet ist und das innenverspiegelte Rohr besonders vorteilhaft rotationssymmetrisch, insbesondere zylindrisch ausgebildet ist.

6. Laser (1) nach einem der vorhergehenden Ansprüche mit einem Austrittsstrahlengang für einen im Betriebszustand aus dem Laserresonator austretenden Austrittsstrahl (10), **dadurch gekennzeichnet, dass** der Laserresonator weitere Umlenkspiegel (5) aufweist, welche mit einer solchen Beschichtung versehen sind, dass sie eine möglichst geringe Polarisationsselektivität bei einer Reflexion aufweisen, sodass im Betriebszustand des Lasers (1) der Austrittsstrahl (10) azimutal polarisiert bleibt.

7. Laser (1) nach einem der vorhergehenden Ansprüche, **dadurch gekennzeichnet, dass** im weiteren Austrittsstrahlengang eine Polarisatorvorrichtung (8) mit mindestens einem phasen-retardierenden oder unbeschichteten Spiegel mit einer Eingangsstrahlachse angeordnet ist, welcher geeignet ist, den azimutalen Polarisationszustand in einen von azimutal verschiedenen Polarisationszustand zu wandeln, wobei vorzugsweise im Austrittsstrahlengang eine Polarisatorvorrichtung, bestehend aus vier paarweise um 45° um die Eingangsstrahlachse verdrehten, um eine Viertelwellenlänge des Laserlichts retardierenden Spiegeln (9) oder bestehend aus zwei um 45° um die Eingangsstrahlachse verdrehten, um eine halbe Wellenlänge des Laserlichts retardierenden Spiegeln (9) angeordnet ist, welche geeignet ist, den azimutalen in einen radialen Polarisationszustand zu wandeln.

8. Laser (1) nach einem der vorhergehenden Ansprüche, **dadurch gekennzeichnet, dass** die Spiegelflächen zur Erzeugung einer Strahlumlenkung um 180° angeordnet sind.

9. Laser (1) nach einem der Ansprüche 1 bis 7, **dadurch gekennzeichnet, dass** die Spiegelflächen zur Erzeugung einer Strahlumlenkung um 90° angeordnet sind.

10. Laser (1) nach einem der vorhergehenden Ansprüche, **dadurch gekennzeichnet, dass** er ein verstärkendes Medium aufweist, wobei als verstärkendes Medium ein Gas, vorzugsweise eine Gasmischung für einen CO₂- Laser vorgesehen ist.

11. Laser (1) nach einem Ansprüche 1 bis 9, **dadurch gekennzeichnet, dass** er ein verstärkendes Medium aufweist, wobei das verstärkende Medium wenigstens einen Festkörper, vorzugsweise wenigstens einen Festkörperstab und/oder wenigstens eine Festkörperscheibe umfasst.

12. Laser (1) nach Anspruch 5, **dadurch gekennzeichnet, dass** die Spiegelanordnung einstückig ausgebildet ist.

13. Laser (1) nach einem der vorhergehenden Ansprüche, **dadurch gekennzeichnet, dass** die Spiegelanordnung als innenverspiegeltes rotationssymmetrisches Rohr ausgeführt ist und die reflektierenden Spiegelflächen eine Subwellenlängenrauheit aufweisen.

14. Laser (1) nach einem der vorhergehenden Ansprüche, **dadurch gekennzeichnet, dass** die strahlaufweitenden optischen Komponenten (2, 3) und die strahlfokusierende optische Komponente (4) als deformierbare Spiegelmembranen aufgebaut sind, wobei vorzugsweise die Spiegelmembranen mit einem oder mehreren Aktuatoren (26) oder durch Beaufschlagung mit einem regelbaren Druck von Kühlflüssigkeit oder Druck-Gas einstellbar sind.

15. Verfahren zur Erzeugung azimutaler Polarisation eines Laserstrahls mit einem Polarisationsgrad in einem Laserresonator eines Lasers nach einem der Ansprüche 1 bis 14, **dadurch gekennzeichnet, dass** ein interkavitärer Laserstrahl (7) von strahlaufweitenden optischen Komponenten (2, 3) aufgeweitet und auf eine Spiegelfläche einer im Strahlengang zwischen den strahlaufweitenden Komponenten (2, 3) befindlichen strahlfokussierenden optischen Komponente (4) geleitet wird derart, dass der interkavitäre Laserstrahl (7) an der Spiegelfläche der strahlfokussierenden optischen Komponente (4) unter einem Winkel am oder nahe dem Brewster-Winkel auftrifft und reflektiert wird, wodurch der Anteil des azimutalen Polarisationszustands durch selektive Minimierung von dessen Verlusten bei der Reflexion maximiert wird, wobei vorzugsweise Anteile von nicht auf die strahlfokussierende Komponente (4) auftreffenden Laserlicht nicht reflektiert, sondern absorbiert werden.

16. Verwendung eines Lasers nach einem der Ansprüche 1 bis 14 oder eines Verfahrens nach Anspruch 15 zur Lasermaterialbearbeitung, insbesondere zum Laserschneiden.

## Claims

1. A laser (1) comprising a laser beam path for a laser beam, a fraction of which is in a state of azimuthal polarization, in a laser resonator,
**characterized in that**
the laser beam path comprises a beam-focusing optical component (4) that spreads the beam by a spreading angle between two optical components (2, 3), said optical component having mirror surfaces at which the light that is aimed by the beam-spreading optical components (2, 3) at said mirror surfaces during operation of the laser (1) is received and reflected at an angle at or near the Brewster angle, and the fraction of the azimuthal polarization condition is thereby maximized by the selective minimization of losses thereof during reflection.

2. The laser (1) according to Claim 1,
**characterized in that**
the beam-focusing optical component (4) is arranged symmetrically between the beam-spreading optical components (2, 3).

3. The laser (1) according to Claims 1 or 2,
**characterized in that**
the two beam-spreading optical components are configured as concave or convex, spherically or aspherically curved mirrors having a curved base surface, wherein the periphery of the mirrors is preferably elliptical and the ellipse has an axis ratio 1/cos α, wherein α is the beam incidence angle at the curved base surface.

4. The laser (1) according to any one of the preceding claims,
**characterized in that**
the two beam-spreading optical components (2, 3) are identical.

5. The laser (1) according to any one of the preceding claims,
**characterized in that**
the beam-focusing optical component (4) comprises a mirror arrangement with mirror surfaces that face one another, wherein the mirror arrangement is preferably tube-shaped, preferably configured as an internally mirrored tube, and the internally mirrored tube is particularly advantageously rotationally symmetrical, in particular cylindrical.

6. The laser (1) according to any one of the preceding claims, having an output beam path for an output beam (10) which emerges from the laser resonator in the operating condition,
**characterized in that**
the laser resonator comprises additional deflecting mirrors (5) which are provided with such a coating that they have as low as possible a polarization selectivity during reflection, so that in the operating condition of the laser (1) the output beam (10) remains in an azimuthal polarization condition.

7. The laser (1) according to any one of the preceding claims,
**characterized in that**
further along the output beam path a polarization device (8) is arranged, having at least one phase-retarding or uncoated mirror with an input beam axis, which is suitable for changing the azimuthal polarization condition into a polarization condition that is different from the azimuthal, wherein a polarization device is preferably arranged in the output beam path, consisting of four mirrors (9) shifted pair-wise by 45° about the input beam axis that retard by a quarter wavelength of the laser light, or consisting of two mirrors (9) shifted by 45° about the input beam axis that retard by a half wavelength of the laser light, which is suitable for changing the azimuthal polarization condition into a radial one.

8. The laser (1) according to any one of the preceding claims,
**characterized in that**
the mirror surfaces are arranged for generating a beam deflection of 180°.

9. The laser (1) according to any one Claims 1 to 7,
**characterized in that**
the mirror surfaces are arranged for generating a beam deflection of 90°.

10. The laser (1) according to any one of the preceding claims,
**characterized in that**
it comprises a magnifying medium, wherein a gas, preferably a gas mixture for a CO₂ laser, is provided as the magnifying medium.

11. The laser (1) according to any one of Claims 1 to 9,
**characterized in that**
it comprises a magnifying medium, wherein the magnifying medium comprises at least one solid, preferably at least one solid rod and/or at least one solid disc.

12. The laser (1) according to Claim 5,
**characterized in that**
the mirror arrangement is integrally constructed.

13. The laser (1) according to any one of the preceding claims,
**characterized in that**
the mirror arrangement is embodied as an internally mirrored, rotationally symmetrical tube and the reflecting mirror surfaces have a subwavelength roughness.

14. The laser (1) according to any one of the preceding claims,
**characterized in that**
the beam-spreading optical components (2, 3) and the the beam-focusing optical component (4) are configured as deformable mirrored membranes, wherein the mirrored membranes can preferably be adjusted with one or more actuators (26) or by applying a controllable pressure of a cooling liquid or pressure gas.

15. A method for generating azimuthal polarization of a laser beam with a polarization degree in a laser resonator of a laser according to any one of Claims 1 to 14,
**characterized in that**
an intercavitary laser beam (7) is spread by beam-spreading optical components (2, 3) and guided onto a mirror surface of a beam-focusing optical component (4) located in the beam path between the beam-spreading optical components (2, 3) in such a manner that the intercavitary laser beam (7) is received and reflected at the mirror surface of the beam-focusing optical component (4) at an angle at or near the Brewster angle, and the fraction of the azimuthal polarization condition is thereby maximized by the selective minimization of losses thereof during reflection, wherein components of laser light that are not received by the beam-focusing component (4) are preferably not reflected, but absorbed.

16. Use of a laser according to any one of Claims 1 to 14 or of a method according to claim 15, for laser material processing, in particular for laser cutting.

## Revendications

1. Laser (1) avec une trajectoire de rayon laser pour un rayon laser avec une part d'un état de polarisation azimutale dans un résonateur de laser, **caractérisé en ce que** la trajectoire du rayon laser présente, entre deux composants optiques (2, 3) élargissant le rayon d'un certain angle d'élargissement, un composant optique (4) focalisant le rayon avec des surfaces réfléchissantes sur lesquelles, à l'état opérationnel du laser (1), la lumière dirigée par les composants optiques (2, 3) d'élargissement du rayon est incidente et réfléchie sous un angle au niveau ou près de l'angle de Brewster, de manière à ce que la part de l'état de polarisation azimutale soit maximisée par une minimisation sélective de ses pertes au moment de la réflexion.

2. Laser (1) selon la revendication 1, **caractérisé en ce que** le composant optique (4) de focalisation du rayon est disposé de manière symétrique entre les composants optiques (2, 3) d'élargissement du rayon.

3. Laser (1) selon l'une quelconque des revendications 1 ou 2, **caractérisé en ce que** les deux composants optiques d'élargissement du rayon sont réalisés sous forme de miroirs concaves ou convexes, à courbure sphérique ou asphérique, avec une surface de base de courbure, dans lequel de préférence la circonférence des miroirs est réalisée de manière elliptique et l'ellipse présente un rapport des axes 1/cos α, où α est l'angle d'incidence du rayon sur la surface de base de courbure.

4. Laser (1) selon l'une quelconque des revendications précédentes, **caractérisé en ce que** les deux composants optiques (2, 3) d'élargissement du rayon sont réalisés de manière identique.

5. Laser (1) selon l'une quelconque des revendications précédentes, **caractérisé en ce que** le composant optique (4) de focalisation du rayon comprend un ensemble de miroirs avec des surfaces réfléchissantes tournées les unes vers les autres, dans lequel de préférence l'ensemble de miroirs est réalisé de manière tubulaire, de préférence sous la forme d'un tube métallisé à l'intérieur, et de manière particulièrement avantageuse, le tube métallisé à l'intérieur est réalisé en symétrie de révolution, en particulier de manière cylindrique.

6. Laser (1) selon l'une quelconque des revendications précédentes, comprenant une trajectoire de rayon émergent pour un rayon émergent (10) émergeant du résonateur de laser à l'état opérationnel, **caractérisé en ce que** le résonateur de laser présente des miroirs de déviation (5) supplémentaires munis d'un revêtement tel qu'en cas de réflexion ils présentent une sélectivité en polarisation aussi faible que possible de sorte qu'à l'état opérationnel du laser (1) le rayon émergent (10) maintient sa polarisation azimutale.

7. Laser (1) selon l'une quelconque des revendications précédentes, **caractérisé en ce que** sur la trajectoire de rayon émergent supplémentaire est disposé un dispositif de polarisation (8) avec au moins un miroir à retard de phase ou sans revêtement avec un axe de rayon incident, ledit dispositif étant adapté pour convertir l'état de polarisation azimutale en un état de polarisation autre qu'azimutale, dans lequel, de préférence sur la trajectoire de rayon émergent, est disposé un dispositif de polarisation composé de quatre miroirs (9), tournés par paires de 45° autour de l'axe de rayon incident, ayant un retard d'un quart de longueur d'onde de la lumière laser, ou composé de deux miroirs (9) tournés de 45° autour de l'axe de rayon incident, ayant un retard d'une demilongueur d'onde de la lumière laser, ledit dispositif étant adapté pour convertir l'état de polarisation azimutale en un état de polarisation radiale.

8. Laser (1) selon l'une quelconque des revendications précédentes, **caractérisé en ce que** les surfaces réfléchissantes sont disposées pour générer une déviation de rayon de 180°.

9. Laser (1) selon l'une quelconque des revendications 1 à 7, **caractérisé en ce que** les surfaces réfléchissantes sont disposées pour générer une déviation de rayon de 90°.

10. Laser (1) selon l'une quelconque des revendications précédentes, **caractérisé en ce qu'**il présente un milieu amplificateur, dans lequel comme milieu amplificateur, il est prévu un gaz, de préférence un mélange gazeux pour un laser CO₂.

11. Laser (1) selon l'une quelconque des revendications 1 à 9, **caractérisé en ce qu'**il présente un milieu amplificateur, dans lequel le milieu amplificateur comprend au moins un corps solide, de préférence au moins une tige à l'état solide et/ou au moins un disque à l'état solide.

12. Laser (1) selon la revendication 5, **caractérisé en ce que** l'ensemble de miroirs est réalisé d'une seule pièce.

13. Laser (1) selon l'une quelconque des revendications précédentes, **caractérisé en ce que** l'ensemble de miroirs est réalisé sous la forme d'un tube à symétrie de révolution et métallisé à l'intérieur et les surfaces réfléchissantes présentent une rugosité de sous-longueur d'onde.

14. Laser (1) selon l'une quelconque des revendications précédentes, **caractérisé en ce que** les composants optiques (2, 3) d'élargissement du rayon et le composant optique (4) de focalisation du rayon sont réalisés sous forme de membranes réfléchissantes déformables, dans lequel de préférence les membranes réfléchissantes sont réglables par un ou plusieurs actionneurs (26) ou par une sollicitation par une pression ajustable d'un liquide de refroidissement ou d'un gaz comprimé.

15. Procédé pour générer une polarisation azimutale d'un rayon laser ayant un degré de polarisation dans un résonateur de laser d'un laser selon l'une quelconque des revendications 1 à 14, **caractérisé en ce qu'**un rayon laser intercavitaire (7) est élargi par des composants optiques (2, 3) d'élargissement du rayon et dirigé vers une surface réfléchissante d'un composant optique (4) de focalisation du rayon se trouvant sur la trajectoire du rayon entre les composants (2, 3) d'élargissement du rayon, de telle sorte que le rayon laser intercavitaire (7) est incident et réfléchi sur la surface réfléchissante du composant optique (4) de focalisation du rayon sous un angle au niveau ou près de l'angle de Brewster, de manière à ce que la part de l'état de polarisation azimutale est maximisée par une minimisation sélective de ses pertes au moment de la réflexion, dans lequel de préférence des parts de lumière laser non incidentes sur le composant (4) de focalisation du rayon ne sont pas réfléchies mais absorbées.

16. Utilisation d'un laser selon l'une quelconque des revendications 1 à 14 ou d'un procédé selon la revendication 15 pour l'usinage de matériaux au laser, en particulier pour la découpe au laser.
